# FASCICULE DE BREVET EUROPEEN

(11) **EP 3 306 513 B1**
(45) Date de publication et mention de la délivrance du brevet: **05.08.2020**
(21) Numéro de dépôt: 17164784.5
(22) Date de dépôt: 04.04.2017
(51) Int. Cl.: G06F 21/57, G06F 8/654, G06F 8/656, G06F 13/16, G06F 13/38

(54) **PROCÉDÉ DE GESTION D'UNE MISE À JOUR D'AU MOINS UN MICROCODE AU SEIN D'UNE UNITÉ DE TRAITEMENT, PAR EXEMPLE UN MICROCONTRÔLEUR, ET UNITÉ DE TRAITEMENT CORRESPONDANTE**
VERFAHREN ZUR STEUERUNG EINER AKTUALISIERUNG MINDESTENS EINES MIKROCODES IN EINER VERARBEITUNGSEINHEIT, ZUM BEISPIEL EINEM MIKROCONTROLLER, UND ENTSPRECHENDE VERARBEITUNGSEINHEIT
UPDATE MANAGEMENT METHOD OF AT LEAST ONE FIRMWARE IN A PROCESSING UNIT, FOR EXAMPLE A MICROCONTROLLER, AND CORRESPONDING PROCESSING UNIT

(30) Priorité: 04.10.2016 FR 1659550
(43) Date de publication de la demande: 11.04.2018
(73) Titulaire: STMicroelectronics (Rousset) SAS, 13790 Rousset (FR)
(72) Inventeur: ONDE, Vincent, 13710 Fuveau (FR)
(74) Mandataire: Casalonga

(56) Documents cités:
- EP-A1- 3 073 372
- US-A1- 2013 159 986
- US-A1- 2013 268 922

## Description

Des modes de mise en œuvre et de réalisation de l'invention concernent les unités de traitement, notamment des microcontrôleurs, par exemple mais non limitativement les microcontrôleurs pour alimentation numérique à découpage (« Digital Switch Mode Power Supply » en anglais), pilotés par des microcodes, communément connus par l'homme du métier sous la désignation anglo-saxonne « Firmware », contrôlés par des contrôleurs de microcode correspondants, et contenant des périphériques matériels tels que des horloges de haute résolution ou des contrôleurs d'accès direct à une mémoire, respectivement connus par l'homme du métier sous les acronymes anglo-saxons « HRTimer » (« High Resolution Timer » en anglais) ou « DMA Controller » (« Direct Memory Acces Controller » en anglais), et plus particulièrement la mise à jour de ces microcodes.

D'une façon générale, les microcontrôleurs sont configurés pour être capables de mettre à jour les microcodes et de programmer les périphériques matériels, avec d'éventuelles périodes d'interruptions de fonctionnement du microcontrôleur, communément connus par l'homme du métier sous la désignation anglo-saxonne « down-time ».

Afin d'effectuer une mise à jour d'un microcode dans un tel microcontrôleur, il est actuellement généralement nécessaire soit de procéder à un redémarrage du microcontrôleur à l'issue de la mise à jour, soit de procéder à une interruption d'éventuelles programmations de périphériques matériels pendant ladite mise à jour du microcode, ce qui introduit de toute façon un « down-time » additionnel du microcontrôleur.

Une reprogrammation des périphériques matériels du microcontrôleur à l'issue de la mise à jour, sans aucun redémarrage du microcontrôleur, est réalisable de façon logicielle mais engendre une augmentation permanente de la charge d'opérations du microcontrôleur et d'une latence en temps réel considérablement accrue.

Par ailleurs, une telle reprogrammation augmente de façon additionnelle la complexité du logiciel ainsi que le « down-time » du microcontrôleur.

En conséquence, il existe un besoin d'avoir des microcontrôleurs capables d'effectuer, à la volée (« on the fly » en anglais), des mises à jour de microcodes et de périphériques matériels sans aucune interruption de sources d'alimentation associées. Les demandes de brevets EP 3 073 372 A1 et US2013/0268922 A1 concernent des procédés de mise à jour de micro-code En particulier EP 3 073 372 A1 divulgue un procédé de mise à jour (« code load » en anglais) effectué par un dispositif de gestion de code d'un nœud de calcul invoqué par un moteur de charge de code de la console de gestion. Le dispositif de gestion de code détermine des exemplaires redondants de composants périphériques et gère des opérations de charge de code de façon séquentielle et répétitive dans tous les exemplaires redondants (j) de chaque type (i) de composants périphériques.

Ainsi, selon un mode de mise en œuvre et de réalisation, il est proposé de répondre à ce besoin et d'offrir une solution technique à faible coût et à faible complexité pour rendre cohérents des mises à jour de microcodes et des programmations de périphériques matériels dans un microcontrôleur de façon à réduire voire à éliminer des « down-time » du microcontrôleur.

Selon un aspect, il est proposé un procédé de gestion de la mise à jour d'au moins un microcode stocké dans au moins une mémoire programme, et destiné à être exécuté par au moins une unité centrale d'une unité de traitement, ladite unité de traitement comportant un contrôleur de mémoire associé à chaque mémoire programme, et au moins un périphérique matériel.

La mise à jour d'un microcode s'entend ici comme étant une mise à jour à la volée, qui se distingue du téléchargement du microcode lui-même qui est généralement une tâche de fond exécutée par l'unité de traitement conjointement à l'exécution de sa tâche principale.

Le procédé comprend,
en réponse à au moins une demande de mise à jour de chaque microcode,
une transmission à chaque périphérique matériel, d'un signal global de demande d'autorisation obtenu à partir d'un signal
une transmission d'un signal global d'autorisation obtenu à partir d'au moins un signal élémentaire d'autorisation généré par l'un au moins des périphériques matériels en réponse audit signal global de demande d'autorisation et après satisfaction au sein dudit au moins l'un des périphériques matériels d'une condition élémentaire prédéterminée,
une mise à jour de chaque microcode par le contrôleur de mémoire correspondant seulement après réception dudit signal global d'autorisation, dans lequel la satisfaction de ladite condition élémentaire prédéterminée comprend le déclenchement de l'exécution par ledit au moins l'un des périphériques matériels d'au moins une opération à la suite d'une réception par ledit au moins l'un des périphériques d'une requête d'exécution de cette opération.

Selon des variantes de réalisation, il peut être notamment prévu au sein de l'unité de traitement, une seule unité centrale, un seul contrôleur de mémoire et un seul périphérique, ou bien une seule unité centrale, un seul contrôleur de mémoire et plusieurs périphériques, ou bien plusieurs unités centrales, plusieurs contrôleurs de mémoire et plusieurs périphériques.

Lorsqu'il est prévu un seul contrôleur de mémoire, ledit signal global de demande d'autorisation est le signal élémentaire de demande d'autorisation généré par le contrôleur de mémoire.

Lorsqu'il est prévu un seul périphérique, ledit signal global d'autorisation est le signal élémentaire d'autorisation généré par le périphérique.

Par contre lorsqu'il est prévu plusieurs contrôleurs de mémoire, ledit signal global de demande d'autorisation peut être obtenu à partir des signaux élémentaires de demande d'autorisation généré par les différents contrôleurs de mémoire.

De même lorsqu'il est prévu plusieurs périphériques, ledit signal global d'autorisation peut être obtenu à partir des signaux élémentaires d'autorisation généré par les différents périphériques ou éventuellement par l'un ou certains d'entre eux en fonction d'une sélection de ces périphériques.

Un tel procédé permet de mettre à jour le ou les microcodes seulement lorsque le ou tous les périphériques sélectionnés ont satisfait en leur sein une condition prédéterminée, par exemple lorsqu'ils sont prêts à exécuter une opération. Dans le cas contraire, on n'effectue pas la mise à jour du microcode et on attend la réception du signal global d'autorisation (qui est typiquement un signal d'acquittement) généré par le ou les périphériques sélectionnés et qui indique que celui-ci ou ceux-ci sont tous prêts à exécuter leurs opérations respectives, c'est à dite qu'ils satisfont chacun à leur condition prédéterminée.

Un tel procédé permet avantageusement de rendre cohérentes la mise à jour dudit au moins un microcode et l'exécution d'au moins une opération d'au moins un périphérique matériel de façon transparente.

Autrement dit, la mise à jour dudit au moins un microcode ne provoque aucune interruption de l'exécution d'une opération dudit au moins un périphérique matériel

La mise à jour à la volée du microcode ne provoque également aucune interruption de l'exécution de l'unité centrale. Le contrôleur de mémoire associé permet de passer d'une version du logiciel à une autre sans devoir réinitialiser (« reset ou reboot » en anglais) ladite unité centrale.

Cette transparence de fonctionnement permet avantageusement des mises à jour de niveaux d'abstraction mixtes du microcontrôleur, ici des mises à jour de haut niveau de microcodes et des mises à jour de bas niveau de périphériques.

Ladite au moins une demande de mise à jour d'un microcode peut être externe, par exemple un signal externe ou un signal issu de l'actionnement d'un bouton poussoir, ou bien plus généralement interne, par exemple un signal de commande généré par chaque unité centrale associée à la suite d'un téléchargement et d'une vérification du nouveau microcode correspondant.

Comme indiqué précédemment, la satisfaction de ladite condition élémentaire prédéterminée comprend le déclenchement de l'exécution par ledit au moins l'un des périphériques matériels d'au moins une opération à la suite d'une réception par ledit au moins l'un des périphériques d'une requête d'exécution de cette opération.

La satisfaction de ladite condition élémentaire prédéterminée peut comprendre en outre, avant le déclenchement de l'exécution de ladite au moins une opération, une précharge d'au moins un registre de contrôle correspondant du périphérique à la suite de la réception de la requête d'exécution de cette opération, ledit déclenchement étant activé au moment d'un prochain front de déclenchement d'au moins un signal de mise à jour d'événements du périphérique.

Selon un mode de mise en œuvre, la génération du signal élémentaire de demande d'autorisation par l'un au moins des contrôleurs de mémoire est également conditionnée à la réception par ledit l'un au moins des contrôleurs de mémoire d'un signal élémentaire de demande d'interruption généré, en réponse à une demande externe de mise à jour d'une table d'interruptions, par un contrôleur de vecteurs d'interruptions couplé audit l'un au moins des contrôleurs de mémoire.

Selon un autre aspect, il est proposé une unité de traitement, par exemple un microcontrôleur, comprenant
au moins une mémoire programme,
au moins une unité centrale destinée à exécuter au moins un microcode stocké dans ladite au moins une mémoire programme,
un contrôleur de mémoire associé à chaque mémoire programme, chaque contrôleur de mémoire étant configuré pour générer, en réponse à au moins une demande de mise à jour du microcode associé, un signal élémentaire de demande d'autorisation,
au moins un périphérique matériel,
des premiers moyens de génération configurés pour générer un signal global de demande d'autorisation à partir de chaque signal élémentaire de demande d'autorisation et pour transmettre à chaque périphérique matériel le signal global de demande d'autorisation,
l'un au moins des périphériques matériels étant configuré pour générer, en réponse audit signal global de demande d'autorisation et après satisfaction d'une condition élémentaire prédéterminée au sein dudit l'un au moins des périphériques matériels, un signal élémentaire d'autorisation,
des deuxièmes moyens de génération configurés pour générer un signal global d'autorisation à partir de l'un au moins des signaux élémentaires d'autorisation et transmettre à chaque contrôleur de mémoire le signal global d'autorisation,
chaque contrôleur de mémoire étant en outre configuré pour mettre à jour le microcode correspondant seulement après réception dudit signal global d'autorisation, dans laquelle ledit l'un au moins des périphériques est configuré pour déclencher l'exécution d'au moins une opération après avoir reçu une requête d'exécution de cette opération de façon à satisfaire ladite condition élémentaire prédéterminée au sein de ce périphérique.

Selon un mode de réalisation, ledit l'un au moins des périphériques est en outre configuré pour pré-charger, avant de déclencher l'exécution de ladite au moins une opération, au moins un registre de contrôle de ce périphérique à la suite de la réception de la requête d'exécution de cette opération, et pour déclencher l'exécution de ladite au moins une opération à l'occurrence du prochain front de déclenchement d'au moins un signal de mise à jour d'événements du périphérique.

Selon un mode de réalisation, l'unité de traitement comprend en outre un contrôleur d'interruptions associé à chaque contrôleur de mémoire et configuré pour transmettre, en réponse à une demande externe de mise à jour d'une table d'interruptions, un signal élémentaire de demande d'interruption au contrôleur de mémoire associé, ledit contrôleur de mémoire associé étant configuré pour générer le signal élémentaire de demande d'autorisation en réponse à la demande de mise à jour du microcode associé et en réponse au signal élémentaire de demande d'interruption correspondant.

Selon un mode de réalisation, ledit au moins un contrôleur de mémoire et ledit au moins un périphérique matériel sont sécurisés, et le signal global de demande d'autorisation et le signal global d'autorisation sont également sécurisés.

Selon un autre aspect, il est proposé un système électronique, tel qu'une alimentation numérique à découpage, comportant au moins une unité de traitement telle que définie ci-avant.

Selon encore un autre aspect, il est proposé un appareil électronique tel qu'un téléphone portable cellulaire, une tablette, un ordinateur portable, comprenant au moins un système tel que défini ci-avant.

D'autres avantages et caractéristiques de l'invention apparaîtront à l'examen de la description détaillée de modes de mise en œuvre et de réalisation, nullement limitatifs, et des dessins annexés sur lesquels :

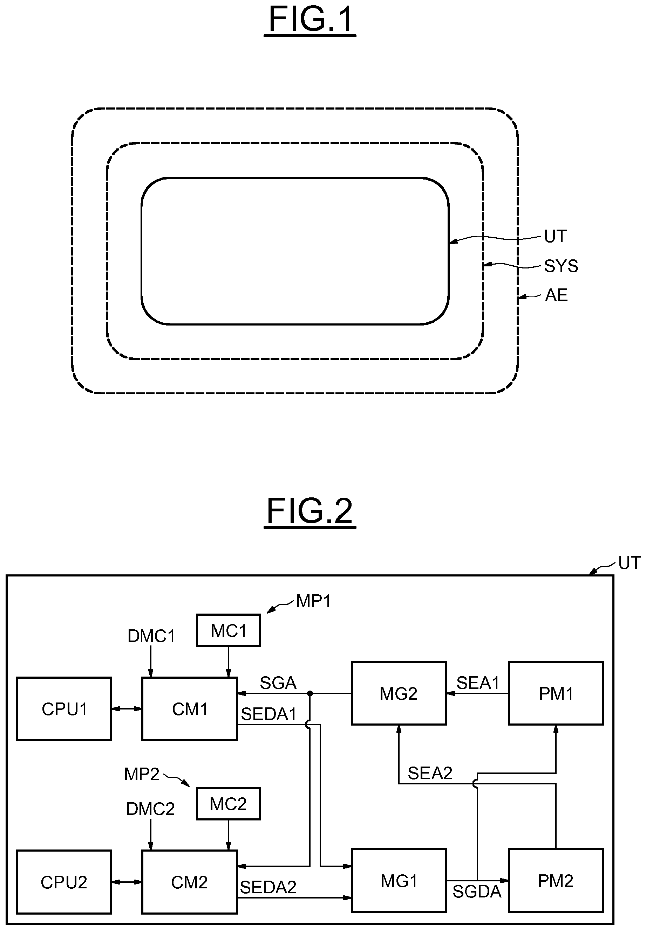

- les figures 1 à 8 illustrent schématiquement des modes de mise en œuvre et de réalisation de l'invention.

Sur la figure 1, la référence AE désigne un appareil électronique AE tel qu'un ordinateur portable, une tablette, un téléphone mobile cellulaire, sans que ces exemples ne soient limitatifs, comprenant un système électronique SYS, ici par exemple une alimentation numérique à découpage apte à convertir de façon précise et fiable une tension d'alimentation d'entrée en une ou plusieurs tensions d'alimentation internes utilisables par des différents modules du système électronique SYS.

Ledit système SYS comporte en outre au moins une unité de traitement UT, telle qu'un microcontrôleur ou un microprocesseur.

La figure 2 illustre schématiquement un exemple d'une unité de traitement UT incorporé dans ledit système électronique SYS suivant l'invention.

L'unité de traitement UT comprend
au moins une mémoire programme, ici par exemple deux mémoires programmes du type de flash MP1 et MP2, destinées à stocker respectivement deux microcodes MC1 et MC2 correspondants,
au moins une unité centrale, communément connue par l'homme du métier sous l'acronyme anglo-saxon « CPU » (« Central Processing Unit » en anglais) ici par exemple deux unités centrales CPU1 et CPU2, destinées à exécuter respectivement les microcodes MC1, MC2,
un contrôleur de mémoire CM1, CM2 associé à chaque mémoire programme MP1, MP2 et destiné à mettre à jour ledit au moins un microcode MC1, MC2, chaque contrôleur de mémoire CM1, CM2 étant également configuré pour générer, en réponse à au moins une demande DMC1, DMC2 de mise à jour du microcode MC1, MC2 associé, un signal élémentaire de demande d'autorisation SEDA1, SEDA2,
au moins un périphérique matériel ici par exemple deux périphériques matériels PM1 et PM2, tel qu'une horloge haute résolution (« High Resolution Timer » : HRTimer en anglais), une horloge de sécurité, une horloge de modulation de largeur d'impulsions (« Pulse Width Modulation » : PWM en anglais), un contrôleur DMA, un périphérique de sécurité, ou encore un domaine d'alimentation (« power domain ») du microcontrôleur,
des premiers moyens de génération MG1 destinés à transmettre à chaque périphérique matériel un signal global de demande d'autorisation SGDA obtenu à partir de chaque signal élémentaire de demande d'autorisation SEDA1, SEDA2, chaque périphérique étant alors configuré pour générer, en réponse audit signal global de demande d'autorisation SGDA et après satisfaction d'une condition élémentaire prédéterminée, un signal élémentaire d'autorisation SEA1, SEA2. La satisfaction de cette condition élémentaire prédéterminée peut être par exemple le déclenchement de l'exécution d'une opération (une programmation) par le périphérique.

L'unité de traitement comporte également des deuxièmes moyens de génération MG2 destinés à transmettre à chaque contrôleur de mémoire CM1, CM2 un signal global d'autorisation SGA obtenu à partir de chaque signal élémentaire d'autorisation SEA1, SEA2.

La mise à jour de chaque microcode MC1, MC2 par le contrôleur de mémoire CM1, CM2 correspondant est alors effectuée seulement après réception dudit signal global d'autorisation SGA.

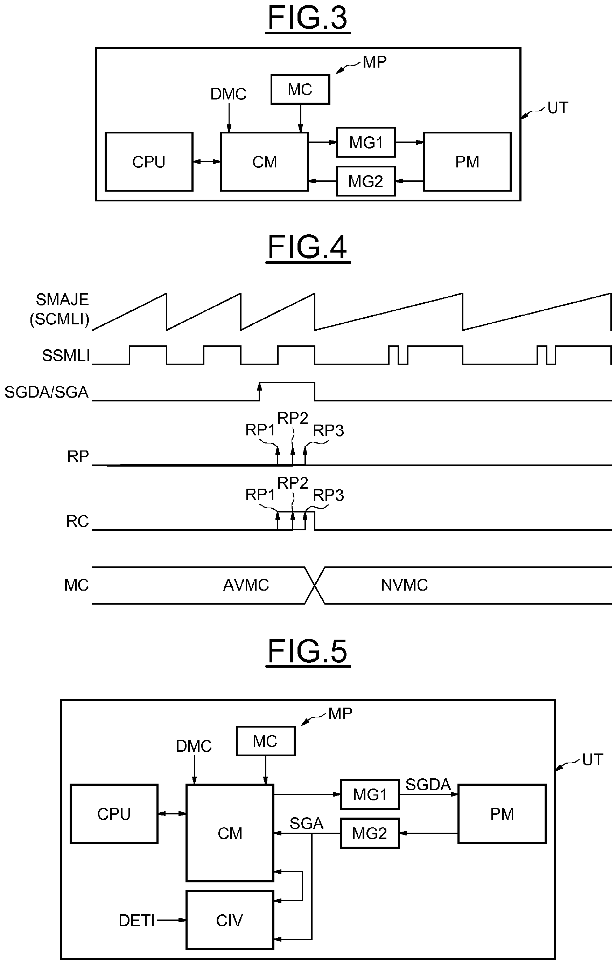

On se réfère tout d'abord à la figure 3 pour illustrer très schématiquement un mode de réalisation d'une unité de traitement UT suivant l'invention comportant une seule unité centrale CPU et un seul périphérique matériel PM.

L'unité de traitement UT comporte une mémoire programme MP destinée à stocker un microcode MC, un contrôleur de mémoire CM couplé à la mémoire programme MP et au périphérique matériel PM et les premiers et deuxièmes moyens de génération MG1 et MG2.

Cela étant, comme dans ce mode de réalisation il n'y a qu'un seul contrôleur de mémoire CM et un seul périphérique matériel PM dans cette unité de traitement UT, les premiers et deuxièmes moyens de génération MG1 et MG2 se résument alors à de simples lignes de connexion. Ainsi le signal global de demande d'autorisation SGDA est alors le signal élémentaire de demande d'autorisation SEDA généré par le contrôleur de mémoire CM et le signal global d'autorisation SGA est alors le signal élémentaire d'autorisation SEA généré par le périphérique matériel.

Lorsqu'une mise à jour dudit microcode MC est demandée par exemple par un utilisateur, un signal DMC de demande de mise à jour de microcode est généré, généralement de façon logicielle, et est délivré au contrôleur de mémoire CM.

On se réfère maintenant conjointement à la figure 4 pour illustrer un exemple d'un procédé de gestion de mise à jour du microcode MC dans l'unité de traitement UT telle qu'illustrée sur la figure 3.

Le contrôleur de mémoire CM est configuré pour délivrer au périphérique matériel PM le signal global de demande d'autorisation SGDA à la réception dudit signal DMC de demande de mise à jour de microcode. Le signal SGDA est un signal logique qui est ici considéré comme actif (c'est-à-dire effectivement représentatif d'une demande d'autorisation) lorsqu'il prend la valeur logique 1.

Le périphérique matériel PM est configuré pour maintenir à l'état haut (valeur logique 1) le signal global de demande d'autorisation SGDA en attendant l'arrivée d'au moins une requête d'opération (ou requête de programmation) RP1, RP2, RP3 du périphérique matériel PM, générée de façon logicielle, ou de façon matérielle par exemple par un contrôleur DMA destiné à transférer une nouvelle programmation depuis une mémoire à accès direct (« Random Acces Memory » : RAM en anglais) vers le périphérique matériel PM. Une requête d'opération indique au périphérique matériel qu'il va devoir exécuter ladite opération.

Le périphérique matériel PM est en outre configuré pour préparer l'exécution de la ou des opérations correspondantes et délivrer audit contrôleur de mémoire CM le signal global d'autorisation SGA à l'issue de la préparation de cette exécution, c'est-à-dire lorsque le périphérique matériel est prêt à exécuter la ou les opérations. Le signal d'autorisation SGA est considéré ici comme émis sur le front descendant du signal SGDA, c'est-à-dire lorsque ce signal logique prend la valeur 0 (état bas).

Plus précisément, dans cet exemple, la préparation de l'exécution d'une requête d'opération RPi effectuée par le périphérique matériel PM comporte une précharge d'un registre de contrôle RCi dudit périphérique matériel PM, associé à ladite requête d'opération RPi.

L'exécution de ladite opération RPi va se déclencher lors du prochain front de déclenchement d'un signal de mise à jour d'événements SMAJE (« update event signal » en anglais) de l'unité de traitement UT.

Au moment du déclenchement de cette exécution, on considère que la condition élémentaire prédéterminée est satisfaite et le périphérique PM est alors configuré pour prendre en compte le contenu du registre de contrôle RCi pré-chargé correspondant et délivrer audit contrôleur de mémoire CM ledit signal global d'autorisation SGA.

Si le périphérique matériel PM reçoit plusieurs requêtes d'opération RP1, RP2, RP3, par exemple dans le cas d'un contrôleur DMA, tous les registres de contrôle RC1, RC2 et RC3 correspondants sont pré-chargés dans l'ordre d'arrivée des requêtes.

Il convient de noter que le prochain front de déclenchement dudit signal de mise à jour d'événements SMAJE arrive toujours plus tard par rapport à ladite au moins une requête de programmation RPi parce que le signal de mise à jour d'événements SMAJE est généré en fonction de ladite au moins une requête d'opération RPi. A titre d'exemple, on peut avoir un mécanisme de comptage du nombre de requêtes de façon à déclencher la mise à jour du périphérique matériel PM après un certain nombre de requêtes, ou plus simplement déclencher le signal de mise à jour d'événements SMAJE par un signal de fin de transaction de DMA (« end of DMA transfert signal » en anglais).

Le contrôleur de mémoire CM est en outre configuré pour mettre à jour ledit microcode MC stocké dans la mémoire programme MP à la réception du signal global d'autorisation SGD.

Autrement dit, comme illustré sur la partie basse de la figure 4, à la réception du signal global d'autorisation SGD, la nouvelle version de microcode NVMC est prise en compte par ledit contrôleur de mémoire CM pour remplacer l'ancienne version AVMC de ce microcode.

Dans l'application décrite ici, l'unité de traitement UT est en outre configurée pour mettre à jour, pendant la mise à jour dudit microcode MC, au moins un signal de sortie de modulation de largeur d'impulsions SSMLI et au moins un signal de compteur de modulation de largeur d'impulsions SCMLI, comme illustré sur la figure 4.

Comme la mise à jour du microcode MC n'implique aucune interruption de programmation du périphérique matériel PM ni redémarrage de l'unité de traitement, le procédé de gestion de mise à jour du microcode MC décrit ci-avant permet avantageusement de diminuer, voire de supprimer, les périodes d'interruptions d'opération (« down-time ») de l'unité de traitement UT tout en offrant une possibilité d'effectuer des mises à jour mixtes, c'est-à-dire des mises à jour de microcodes et de pilotes de périphériques matériels.

La figure 5 illustre une variante possible du microcontrôleur illustré sur la figure 3.

Dans ce mode de réalisation, le microcontrôleur UT comprend en outre un contrôleur de vecteurs d'interruptions CIV couplé audit contrôleur de mémoire CM et permettant de gérer les interruptions lors de l'occurrence d'événements extérieurs.

Le contrôleur de vecteurs d'interruptions CIV est également destiné à recevoir un signal DETI de demande externe de mises à jour d'un tableau d'interruption généré de façon logicielle par un utilisateur, ainsi que le signal global d'autorisation SGA délivré par ledit périphérique matériel PM.

Par ailleurs ledit contrôleur de vecteurs d'interruptions CIV et ledit contrôleur de mémoire CM sont conjointement configurés pour former un mécanisme de verrouillage (« interlock » en anglais). Ainsi le contrôleur de mémoire CM est configuré pour délivrer le signal global/élémentaire de demande d'autorisation seulement lorsque les deux signaux de demande de mises à jour DMC et DETI sont conjointement générés et activés par un utilisateur.

Le contrôleur de vecteurs d'interruptions CIV est en outre configuré pour mettre à jour l'adresse de base d'une table d'interruption correspondante à la réception du signal global d'autorisation, conjointement à la mise à jour du microcode par le contrôleur de mémoire (figure 4).

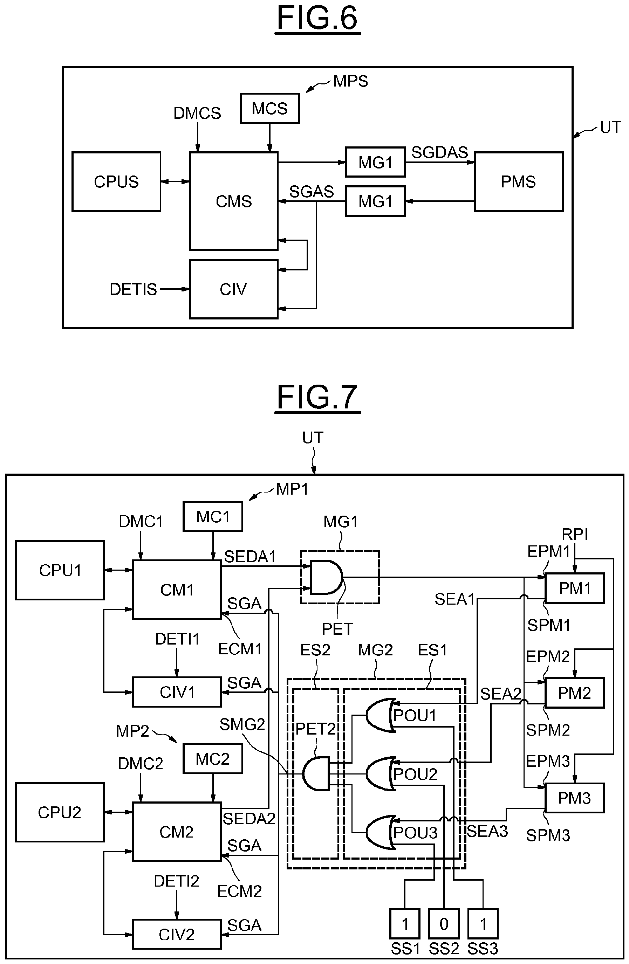

Selon une autre variante possible illustrée sur la figure 6, l'unité centrale est une unité centrale sécurisée CPUS, le contrôleur de mémoire CM peut être un contrôleur de mémoire sécurisé CMS et le périphérique matériel PM peut être un périphérique matériel sécurisé PMS.

Le microcode est alors un microcode sécurisé MCS et les différents signaux DMC, SGDA, SGA, DETI mentionnés ci-avant deviennent des signaux correspondants sécurisé DMCS, SGDAS, SGAS, DETIS.

Les différentes étapes du procédé de gestion de mise à jour d'un microcode sécurisé dans cette variante (figure 6) sont similaires à celles décrites précédemment en référence à la figure 4 et ne sont par conséquent pas décrites à nouveau ici à des fins de simplification.

Une autre variante possible est illustrée schématiquement sur la figure 7.

L'unité de traitement UT selon cette variante comporte plusieurs unités centrales, ici par exemple deux unités centrales CPU1 et CPU2, deux contrôleurs de mémoire correspondants CM1 et CM2, deux contrôleurs d'interruptions de vecteur correspondants CIV1 et CIV2, et plusieurs périphériques matériels, ici par exemple trois périphériques PM1, PM2, PM3. Tous ces éléments peuvent être sécurisés ou non.

Les premiers moyens de génération MG1 sont couplés entre des sorties des contrôleurs de mémoire correspondants MC1 et MC2 et des entrées EPM1, EPM2, EPM3 des trois périphériques matériels PM1 à PM3.

Chaque contrôleur de mémoire CM1 ou CM2 délivre aux premiers moyens de génération MG1 le signal élémentaire de demande d'autorisation SEDA1, SEDA2 correspondant. Les premiers moyens de génération MG1 sont configurés pour générer en sortie le signal global de demande d'autorisation SGDA et transmettre ce signal global de demande d'autorisation SGDA aux entrées EPM1 à EPM3 des trois périphériques matériels PM1 à PM3.

Les premiers moyens de génération MG1 sont configurés pour placer le signal global de demande d'autorisation SGDA qui est à l'état haut lorsque chaque signal élémentaire de demande d'autorisation SEDA1, SEDA2 est à l'état haut, c'est-à-dire lorsque chaque contrôleur de mémoire CM1 ou CM2 envisage de mettre à jour le microcode correspondant.

A titre d'exemple, les premiers moyens de génération MG1 comportent ici une porte logique du type ET, référencée PET, qui reçoit les signaux élémentaires de demande d'autorisation SEDA1 et SEDA2 délivrés respectivement par les deux contrôleurs de mémoire CM1 et CM2 et qui délivre en sortie le signal SGDA.

Les deuxièmes moyens de génération MG2 sont couplés entre des sorties SPM1 à SPM3 des trois périphériques matériels PM1 à PM3 et des entrées ECM1 et ECM2 des contrôleurs de mémoire CM1 et CM2.

Chaque périphérique matériel PM1 à PM3 délivre aux deuxièmes moyens de génération MG2 le signal élémentaire d'autorisation correspondant SEA1 à SEA3 une fois la condition élémentaire prédéterminée satisfaite.

Les deuxièmes moyens de génération MG2 génèrent à leur sortie SMG2, le signal global d'autorisation SGA et délivrent ce signal global d'autorisation SGA aux entrées ECM1 et ECM2 des contrôleurs de mémoire CM1 et CM2.

Les deuxièmes moyens de génération MG2 comprennent ici par exemple
un premier étage de sélection ES1 comportant trois portes logiques du type OU, référencées POU1 à POU3. La première entrée de la porte OU POUi reçoit le signal élémentaire d'autorisation correspondant SEAi et la deuxième entrée reçoit un signal de sélection correspondant SSi, et
un deuxième étage de sélection ES2 comportant simplement une deuxième porte logique PET2 du type ET.

Les signaux de sélection correspondant SS1 à SS3 permettent de sélectionner le ou les périphérique(s) matériel(s) à prendre en compte pour la mise à jour des microcodes MC1 et MC2 de l'unité de traitement UT.

Dans le cas illustré sur la figure 7, les premier et troisième signaux de sélection SS1 et SS3 sont dans l'état haut et seul le deuxième signal de sélection SS2 est dans l'état bas. Par conséquent, les programmations des périphériques matériels correspondants PM1 et PM3 sont ignorés et n'ont pas d'impact sur la mise à jour des microcodes. En effet même si les signaux d'autorisation élémentaires SEA1 et SEA3 sont à l'état bas donc actifs, les sorties des portes OU correspondantes sont à 1. Par conséquent c'est le signal d'autorisation élémentaire SEA2 qui en fonction de son état 0 ou 1 va faire basculer ou non la sortie de la porte ET PET2 dans l'état 0.

En d'autres termes, dans cet exemple, les microcodes MC1 et MC2 sont mis à jour à la réception du deuxième signal élémentaire d'autorisation SEA2 (état bas du signal logique) délivré par le deuxième périphérique matériel PM2, qui va faire basculer à l'état bas le signal global d'autorisation SGA.

Bien entendu, il serait bien possible de sélectionner deux ou plus de deux périphériques matériels pouvant déterminer la mise à jour des microcodes du microcontrôleur MC.

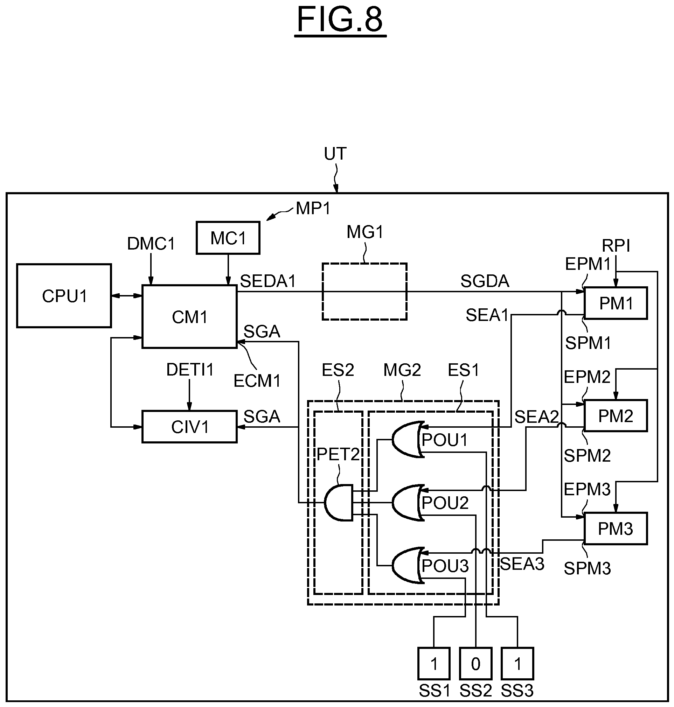

La figure 8 illustre une variante simplifiée de l'unité de traitement UT illustrée sur la figure 7.

Cette unité de traitement UT illustrée sur la figure 8 comporte seulement une seule unité centrale CPU1 et plusieurs périphériques matériels. Les premiers moyens de génération MG1 sont donc juste formés par une ligne de transmission. Par conséquent, le signal élémentaire de demande d'autorisation SEDA1 délivré par le contrôleur de mémoire CM1 est aussi le signal global de demande d'autorisation SGDA.

Le reste de cette unité de traitement UT illustrée de la figure 8 est identique à celle illustré sur la figure 7.

Ainsi, selon des modes de mise en œuvre et de réalisation de l'invention, on obtient une unité de traitement capable d'exécuter à la volée des opérations de périphériques matériels pendant une mise à jour d'un ou plusieurs microcodes, ce qui réduit le « down-time » de l'unité de traitement et maintient de façon transparente la cohérence entre des périphériques matériels et des microcodes de l'unité de traitement.

## Revendications

1. Procédé de gestion de la mise à jour d'au moins un microcode (MC1, MC2) stocké dans au moins une mémoire programme (MP1, MP2), et destiné à être exécuté par au moins une unité centrale (CPU1, CPU2) d'une unité de traitement (UT), ladite unité de traitement (UT) comportant un contrôleur de mémoire (CM1, CM2) associé à chaque mémoire programme (MP1, MP2), et au moins un périphérique matériel (PM1, PM2, PM3),
le procédé comprenant, en réponse à au moins une demande de mise à jour (DMC1, DMC2) de chaque microcode,
une transmission à chaque périphérique matériel (PM1, PM2), d'un signal global de demande d'autorisation (SGDA) obtenu à partir d'un signal élémentaire de demande d'autorisation (SEDA1, SEDA2) généré par chaque contrôleur de mémoire (CM1, CM2) correspondant,
une transmission d'un signal global d'autorisation (SGA) obtenu à partir d'au moins un signal élémentaire d'autorisation (SEA1, SEA2, SEA3) généré par l'un au moins des périphériques matériels (PM1, PM2, PM3) en réponse audit signal global de demande d'autorisation (SGDA) et après satisfaction au sein dudit au moins l'un des périphériques matériels d'une condition élémentaire prédéterminée,
une mise à jour de chaque microcode (MC1, MC2) par le contrôleur de mémoire (CM1, CM2) correspondant seulement après réception dudit signal global d'autorisation (SGA),
dans lequel la satisfaction de ladite condition élémentaire prédéterminée (CEP) comprend le déclenchement de l'exécution par ledit au moins l'un des périphériques matériels (PM1, PM2 ou PM3) d'au moins une opération à la suite d'une réception par ledit au moins l'un des périphériques (PM1, PM2, PM3) d'une requête d'exécution (RP1, RP2, RP3) de cette opération.

2. Procédé selon la revendication 1, dans lequel la satisfaction de ladite condition élémentaire prédéterminée comprend en outre, avant le déclenchement de l'exécution de ladite au moins une opération, une précharge d'au moins un registre de contrôle (RC1, RC2 ou RC3) correspondant du périphérique (PM1, PM2 ou PM3) à la suite de la réception de la requête (RP1, RP2, RP3) d'exécution de cette opération, ledit déclenchement étant activé au moment d'un prochain front de déclenchement d'au moins un signal de mise à jour d'évènements (SMAJE) du périphérique (PM1, PM2 ou PM3).

3. Procédé selon la revendication 1 ou 2, dans lequel la génération du signal élémentaire de demande d'autorisation par l'un au moins des contrôleurs de mémoire (CM1, CM2) est également conditionnée à la réception par ledit l'un au moins des contrôleurs de mémoire d'un signal élémentaire de demande d'interruption (SEDI1, SEDI2) généré, en réponse à une demande externe de mise à jour d'une table d'interruptions (DETI1, DETI2), par un contrôleur de vecteurs d'interruptions (CIV1, CIV2) couplé audit l'un au moins des contrôleurs de mémoire (CM1, CM2).

4. Unité de traitement (UT), comprenant
au moins une mémoire programme (MP1, MP2),
au moins une unité centrale (CPU1, CPU2) destinée à exécuter au moins un microcode (MC1, MC2) stocké dans ladite au moins une mémoire programme (MP1, MP2),
un contrôleur de mémoire (CM1, CM2) associé à chaque mémoire programme (MP1, MP2), chaque contrôleur de mémoire (CM1, CM2) étant configuré pour générer, en réponse à au moins une demande de mise à jour (DMC1, DMC2) du microcode (MC1, MC2) associé, un signal élémentaire de demande d'autorisation (SEDA1, SEDA2),
au moins un périphérique matériel (PM1, PM2, PM3),
des premiers moyens de génération MG1 configurés pour générer un signal global de demande d'autorisation (SGDA) à partir de chaque signal élémentaire de demande d'autorisation (SEDA1, SEDA2) et pour transmettre à chaque périphérique matériel (PM1, PM2) le signal global de demande d'autorisation (SGDA),
l'un au moins des périphériques matériels (PM1, PM2, PM3) étant configuré pour générer, en réponse audit signal global de demande d'autorisation (SGDA) et après satisfaction d'une condition élémentaire prédéterminée au sein dudit l'un au moins des périphériques matériels, un signal élémentaire d'autorisation (SEA1, SEA2, SEA3),
des deuxièmes moyens de génération (MG2) configurés pour générer un signal global d'autorisation (SGA) à partir de l'un au moins des signaux élémentaire d'autorisation (SEA1, SEA2, SEA3) et transmettre à chaque contrôleur de mémoire (CM1, CM2) le signal global d'autorisation (SGA),
chaque contrôleur de mémoire (CM1, CM2) étant en outre configuré pour mettre à jour le microcode (MC1, MC2) correspondant seulement après réception dudit signal global d'autorisation (SGA),
dans laquelle ledit l'un au moins des périphériques (PM1, PM2 ou PM3) est configuré pour déclencher l'exécution d'au moins une opération après avoir reçu une requête d'exécution (RP1, RP2, RP3) de cette opération de façon à satisfaire ladite condition élémentaire prédéterminée au sein de ce périphérique.

5. Unité de traitement (UT) selon la revendication 4, dans laquelle ledit l'un au moins des périphériques (PM1, PM2 ou PM3) est en outre configuré pour pré-charger, avant de déclencher l'exécution de ladite au moins une opération, au moins un registre de contrôle (RC1, RC2 ou RC3) de ce périphérique (PM1, PM2 ou PM3) à la suite de la réception de la requête d'exécution (RP1, RP2, RP3) de cette opération, et pour déclencher l'exécution de ladite au moins une opération à l'occurrence du prochain front de déclenchement d'au moins un signal de mise à jour d'évènements (SMAJE) du périphérique (PM1, PM2 ou PM3).

6. Unité de traitement (UT) selon la revendication 4 ou 5, comprenant en outre un contrôleur d'interruptions (CIV1, CIV2) associé à chaque contrôleur de mémoire (CM1, CM2) et configuré pour transmettre, en réponse à une demande externe de mise à jour d'une table d'interruptions (DETI1, DETI2), un signal élémentaire de demande d'interruption (SEDI1, SEDI2) à au contrôleur de mémoire (CM1, CM2) associé, ledit contrôleur de mémoire associé (CM1, CM2) étant configuré pour générer le signal élémentaire de demande d'autorisation (SEDA1, SEDA2) en réponse à la demande de mise à jour (DMC1, DMC2) du microcode (MC1, MC2) associé et en réponse au signal élémentaire de demande d'interruption (SEDI1, SEDI2) correspondant.

7. Unité de traitement (UT) selon l'une des revendications 4 à 6, dans lequel ledit au moins un contrôleur de mémoire (CM1, CM2) et ledit au moins un périphérique matériel (PM1, PM2) sont sécurisés, et le signal global de demande d'autorisation (SGDA) et le signal global d'autorisation (SGA) sont également sécurisés.

8. Système électronique (SYS) comprenant au moins une unité de traitement (UT) selon l'une quelconque des revendications 4 à 7.

9. Appareil électronique (AE) comprenant au moins un système (SYS) selon la revendication 8.

## Patentansprüche

1. Verfahren zum Verwalten des Updates mindestens eines Mikrocodes (MC1, MC2), der in mindestens einem Programmspeicher (MP1, MP2) gespeichert und dazu bestimmt ist, von mindestens einer Zentraleinheit (CPU1, CPU2) einer Verarbeitungseinheit (UT) ausgeführt zu werden, wobei die Verarbeitungseinheit (UT) eine Speichersteuerung (CM1, CM2) umfasst, die jedem Programmspeicher (MP1, MP2) zugeordnet ist, und mindestens ein Hardware-Peripheriegerät (PM1, PM2, PM3),
wobei das Verfahren in Reaktion auf mindestens eine Anfrage um Update (DMC1, DMC2) jedes Mikrocodes umfasst
ein Übertragen eines allgemeinen Autorisierungsanfragesignals (SGDA), das auf Grundlage eines von jeder entsprechenden Speichersteuerung (CM1, CM2) erzeugten elementaren Autorisierungsanfragesignals (SEDA1, SEDA2) erhalten wird, an jedes Hardware-Peripheriegerät (PM1, PM2),
ein Übertragen eines allgemeinen Autorisierungssignals (SGA), das auf Grundlage mindestens eines elementaren Autorisierungssignals (SEA1, SEA2, SEA3) erhalten wird, das von mindestens einem der Hardware-Peripheriegeräte (PM1, PM2, PM3) in Reaktion auf das allgemeine Autorisierungsanfragesignal (SGDA) und nach Erfüllen einer vorbestimmten elementaren Bedingung in dem mindestens einen der Hardware-Peripheriegeräte erzeugt wird,
ein Updaten jedes Microcodes (MC1, MC2) durch die entsprechende Speichersteuerung (CM1, CM2) erst nach Empfang des allgemeinen Autorisierungssignals (SGA), wobei das Erfüllen der vorbestimmten elementaren Bedingung (CEP) das Auslösen der Ausführung, durch das mindestens eine der Hardware-Peripheriegeräte (PM1, PM2 oder PM3), von mindestens einer Operation im Anschluss an einen Empfang einer Aufforderung zur Ausführung (RP1, RP2, RP3) dieser Operation durch das mindestens eine der Peripheriegeräte (PM1, PM2 oder PM3) umfasst.

2. Verfahren nach Anspruch 1, wobei das Erfüllen der vorbestimmten elementaren Bedingung vor dem Auslösen der Ausführung der mindestens einen Operation weiter ein Vorladen von mindestens einem entsprechenden Steuerregister (RC1, RC2 oder RC3) des Peripheriegeräts (PM1, PM3 oder PM3) im Anschluss an den Empfang der Aufforderung (RP1, RP2, RP3) zur Ausführung dieser Operation umfasst, wobei das Auslösen zum Zeitpunkt einer nächsten Auslöseflanke mindestens eines Ereignis-Updatesignals (SMAJE) des Peripheriegeräts (PM1, PM2 oder PM3) aktiviert wird.

3. Verfahren nach Anspruch 1 oder 2, wobei das Erzeugen des elementaren Autorisierungsanfragesignals durch mindestens eine der Speichersteuerungen (CM1, CM2) ebenfalls vom Empfang eines elementaren Unterbrechungsanfragesignals (SEDI1, SEDI2) durch die mindestens eine der Speichersteuerungen abhängig gemacht wird, das in Reaktion auf eine externe Anfrage um Update einer Unterbrechungstabelle (DETI1, DETI2) durch eine Unterbrechungsvektorsteuerung (CIV1, CIV2), die mit der mindestens einen der Speichersteuerungen (CM1, CM2) gekoppelt ist, erzeugt wird.

4. Verarbeitungseinheit (UT), umfassend
mindestens einen Programmspeicher (MP1, MP2),
mindestens eine Zentraleinheit (CPU1, CPU2), die dazu bestimmt ist, mindestens einen Mikrocode (MC1, MC2) auszuführen, der in dem mindestens einen Programmspeicher (MP1, MP2) gespeichert ist,
eine Speichersteuerung (CM1, CM2), die jedem Programmspeicher (MP1, MP2) zugeordnet ist, wobei jede Speichersteuerung (CM1, CM2) dafür konfiguriert ist, in Reaktion auf mindestens eine Anfrage um Update (DMC1, DMC2) des zugeordneten Mikrocodes (MC1, MC2) ein elementares Autorisierungsanfragesignal (SEDA1, SEDA2) zu erzeugen, mindestens ein Hardware-Peripheriegerät (PM1, PM2, PM3), erste Erzeugungsmittel MG1, die dafür konfiguriert sind, ein allgemeines Autorisierungsanfragesignal (SGDA) auf Grundlage jedes elementaren Autorisierungsanfragesignals (SEDA1, SEDA2) zu erzeugen, und dafür, das allgemeine Autorisierungsanfragesignal (SGDA) an jedes Hardware-Peripheriegerät (PM1, PM2) zu übertragen,
wobei mindestens eines der Hardware-Peripheriegeräte (PM1, PM2, PM3) dafür konfiguriert ist, in Reaktion auf das allgemeine Autorisierungsanfragesignal (SGDA) und nach Erfüllen einer vorbestimmten elementaren Bedingung in dem mindestens einen der Hardware-Peripheriegeräte ein elementares Autorisierungssignal (SEA1, SEA2, SEA3) zu erzeugen,
zweite Erzeugungsmittel (MG2), die dafür konfiguriert sind, auf Grundlage mindestens eines der elementaren Autorisierungssignale (SEA1, SEA2, SEA3) ein allgemeines Autorisierungssignal (SGA) zu erzeugen und das allgemeine Autorisierungssignal (SGA) an jede Speichersteuerung (CM1, CM2) zu übertragen,
wobei jede Speichersteuerung (CM1, CM2) weiter dafür konfiguriert ist, den entsprechenden Mikrocode (MC1, MC2) erst nach Empfang des allgemeinen Autorisierungssignals (SGA) upzudaten,
wobei das mindestens eine der Peripheriegeräte (PM1, PM2 oder PM3) dafür konfiguriert ist, die Ausführung von mindestens einer Operation auszulösen, nachdem eine Aufforderung zur Ausführung (RP1, RP2, RP3) dieser Operation empfangen wurde, um die vorbestimmte elementare Bedingung in diesem Peripheriegerät zu erfüllen.

5. Verarbeitungseinheit (UT) nach Anspruch 4, wobei das mindestens eine der Peripheriegeräte (PM1, PM2 oder PM3) weiter dafür konfiguriert ist, vor dem Auslösen der Ausführung der mindestens einen Operation im Anschluss an den Empfang der Aufforderung zur Ausführung (RP1, RP2, RP3) dieser Operation mindestens ein Steuerregister (RC1, RC2 oder RC3) dieses Peripheriegeräts (PM1, PM2 oder PM3) vorzuladen, und dafür, das Ausführen der mindestens einen Operation beim Auftreten der nächsten Auslöseflanke mindestens eines Ereignis-Updatesignals (SMAJE) des Peripheriegeräts (PM1, PM2 oder PM3) auszulösen.

6. Verarbeitungseinheit (UT) nach Anspruch 4 oder 5, die weiter eine Unterbrechungssteuerung (CIV1, CIV2) umfasst, die jeder Speichersteuerung (CM1, CM2) zugeordnet und dafür konfiguriert ist, in Reaktion auf eine externe Anfrage um Update einer Unterbrechungstabelle (DETI1, DETI2) ein elementares Unterbrechungsanfragesignal (SEDI1, SEDI2) an die zugeordnete Speichersteuerung (CM1, CM2) zu übertragen, wobei die zugeordnete Speichersteuerung (CM1, CM2) dafür konfiguriert ist, das elementare Autorisierungsanfragesignal (SEDA1, SEDA2) in Reaktion auf die Anfrage um Update (DMC1, DMC2) des zugeordneten Mikrocodes (MC1, MC2) und in Reaktion auf das entsprechende elementare Unterbrechungsanfragesignal (SEDI1, SEDI2) zu erzeugen.

7. Verarbeitungseinheit (UT) nach einem der Ansprüche 4 bis 6, wobei die mindestens eine Speichersteuerung (CM1, CM2) und das mindestens eine Hardware-Peripheriegerät (PM1, PM2) gesichert sind, und das allgemeine Autorisierungsanfragesignal (SGDA) und das allgemeine Autorisierungssignal (SGA) ebenfalls gesichert sind.

8. Elektronisches System (SYS), das mindestens eine Verarbeitungseinheit (UT) nach einem der Ansprüche 4 bis 7 umfasst.

9. Elektronische Vorrichtung (AE), die mindestens ein System (SYS) nach Anspruch 8 umfasst.

## Claims

1. Method for managing the updating of at least one microcode (MC1, MC2) stored in at least one program memory (MP1, MP2), and intended to be executed by at least one central processing unit (CPU1, CPU2) of a processing unit (UT), said processing unit (UT) including a memory controller (CM1, CM2) associated with each program memory (MP1, MP2), and at least one hardware peripheral (PM1, PM2, PM3),
the method comprising, in response to at least one request (DMC1, DMC2) to update each microcode, transmitting, to each hardware peripheral (PM1, PM2), an overall authorisation request signal (SGDA) obtained from a base authorisation request signal (SEDA1, SEDA2) generated by each corresponding memory controller (CM1, CM2),
transmitting an overall authorisation signal (SGA) obtained from at least one base authorisation signal (SEA1, SEA2, SEA3) generated by at least one of the hardware peripherals (PM1, PM2, PM3) in response to said overall authorisation request signal (SGDA) and after satisfying a predetermined base condition within said at least one of the hardware peripherals,
updating each microcode (MC1, MC2) by the corresponding memory controller (CM1, CM2) only after receipt of said overall authorisation signal (SGA),
wherein the satisfaction of said predetermined base condition (CEP) comprises triggering the execution, by said at least one of the hardware peripherals (PM1, PM2 or PM3) of at least one operation following receipt, by said at least one of the peripherals (PM1, PM2, PM3) of a request (RP1, RP2, RP3) to execute this operation.

2. Method according to claim 1, wherein the satisfaction of said predetermined base condition further comprises, before triggering the execution of said at least one operation, preloading at least one corresponding control register (RC1, RC2 or RC3) of the peripheral (PM1, PM2 or PM3) following receipt of the request (RP1, RP2, RP3) to execute this operation, said triggering being activated at the time of a next trigger edge of at least one update event signal (SMAJE) of the peripheral (PM1, PM2 or PM3).

3. Method according to claim 1 or 2, wherein the generation of the base authorisation request signal by at least one of the memory controllers (CM1, CM2) is furthermore dependent on the receipt, by said at least one of the memory controllers, of a base interrupt request signal (SEDI1, SEDI2) generated, in response to an external request to update an interrupt table (DETI1, DETI2), by a vectored interrupt controller (CIV1, CIV2) coupled to said at least one of the memory controllers (CM1, CM2).

4. Processing unit (UT), comprising
at least one program memory (MP1, MP2),
at least one central processing unit (CPU1, CPU2) intended to execute at least one microcode (MC1, MC2) stored in said at least one program memory (MP1, MP2),
a memory controller (CM1, CM2) associated with each program memory (MP1, MP2), each memory controller (CM1, CM2) being configured to generate, in response to at least one request (DMC1, DMC2) to update the associated microcode (MC1, MC2), a base authorisation request signal (SEDA1, SEDA2),
at least one hardware peripheral (PM1, PM2, PM3),
first generating means (MG1) configured to generate an overall authorisation request signal (SGDA) from each base authorisation request signal (SEDA1, SEDA2) and to transmit the overall authorisation request signal (SGDA) to each hardware peripheral (PM1, PM2),
at least one of the hardware peripherals (PM1, PM2, PM3) being configured to generate, in response to said overall authorisation request signal (SGDA) and after satisfying a predetermined base condition within said at least one of the hardware peripherals, a base authorisation signal (SEA1, SEA2, SEA3) ,
second generating means (MG2) configured to generate an overall authorisation signal (SGA) from at least one of the base authorisation signals (SEA1, SEA2, SEA3) and to transmit the overall authorisation signal (SGA) to each memory controller (CM1, CM2),
each memory controller (CM1, CM2) being further configured to update the corresponding microcode (MC1, MC2) only after receipt of said overall authorisation signal (SGA),
wherein said at least one of the peripherals (PM1, PM2 or PM3) is configured to trigger the execution of at least one operation after having received a request (RP1, RP2, RP3) to execute this operation so as to satisfy said predetermined base condition within this peripheral.

5. Processing unit (UT) according to claim 4, wherein said at least one of the peripherals (PM1, PM2 or PM3) is further configured to preload, before triggering the execution of said at least one operation, at least one control register (RC1, RC2 or RC3) of this peripheral (PM1, PM2 or PM3) following receipt of the request (RP1, RP2, RP3) to execute this operation, and to trigger the execution of said at least one operation at the time of the next trigger edge of at least one update event signal (SMAJE) of the peripheral (PM1, PM2 or PM3).

6. Processing unit (UT) according to claim 4 or 5, further comprising an interrupt controller (CIV1, CIV2) associated with each memory controller (CM1, CM2) and configured to transmit, in response to an external request to update an interrupt table (DETI1, DETI2), a base interrupt request signal (SEDI1, SEDI2) to the associated memory controller (CM1, CM2), said associated memory controller (CM1, CM2) being configured to generate the base authorisation request signal (SEDA1, SEDA2) in response to the request (DMC1, DMC2) to update the associated microcode (MC1, MC2) and in response to the corresponding base interrupt request signal (SEDI1, SEDI2) .

7. Processing unit (UT) according to one of claims 4 to 6, wherein said at least one memory controller (CM1, CM2) and said at least one hardware peripheral (PM1, PM2) are secure, and the overall authorisation request signal (SGDA) and the overall authorisation signal (SGA) are also secure.

8. Electronic system (SYS) comprising at least one processing unit (UT) according to any one of claims 4 to 7.

9. Electronic apparatus (AE) comprising at least one system (SYS) according to claim 8.
